(19) Europäisches Patentamt
European Patent Office
Office européen des brevets

(11) Publication number: 0 229 912 A2

# (12) EUROPEAN PATENT APPLICATION

(21) Application number: 86115802.0

(22) Date of filing: 13.11.86

(51) Int. Cl.[4]: C 08 G 73/02, C 09 K 7/00

(30) Priority: 19.11.85 US 799530

(43) Date of publication of application: 29.07.87 Bulletin 87/31

(84) Designated Contracting States: DE FR GB IT NL SE

(71) Applicant: **DRESSER INDUSTRIES, INC., 1600 Pacific Avenue P.O. Box 718, Dallas Texas 75221 (US)**

(72) Inventor: **Oehler, Harris Alfred, 2929 Crossview A no. 9, Houston Texas (US)**
Inventor: **Mc Laurine, Henry Clayton, 25211 Sandi Lane, Katy Texas (US)**
Inventor: **Grantham, Charles Kenneth, 10707 Valley Forge, Houston Texas (US)**

(74) Representative: **Wagner, Karl H., WAGNER & GEYER Patentanwälte Gewuerzmuehlstrasse 5 Postfach 246, D-8000 München 22 (DE)**

## (54) Oil based drilling fluids and additives therefor.

(57) By the use of small amounts of novel amido amine reaction products of a fatty acid, an alkanolamine and a polyalkylene polyamine, improved drilling mud formulations are obtained. In oil mud drilling formulations containing organophilic clays, one is able to maximize the viscosity and gelation of the formulations, resulting in less preparation time and less material usage, especially the clay. In accordance with the invention, one is able to thicken or gel oil-mud systems at usual operating temperatures even when using low viscosity/low aromatic oils as the external phase, and to maximize the yield of organophilic clays readily in a short period of time, at low shear rates. The amido amine extends the utility of organoclays in low viscosity oil-mud systems. They produce more shear thinning fluids, higher yield points and quicker gel strengths while maintaining low plastic viscosities.

EP 0 229 912 A2

# OIL BASED DRILLING FLUIDS AND ADDITIVES THEREFOR

## BACKGROUND OF THE INVENTION

Circulating fluids are required in the rotary drilling of formations containing hydrocarbons. These circulating fluids are referred to as drilling muds. There are two major types of emulsion drilling fluids or muds, generally identified as oil-in-water emulsions and water-in-oil emulsions, each having its particular requirements, advantages and problems. Water-in-oil emulsions (oil-mud) are preferred in many applications.

These oil-mud circulating fluids are pumped down the drill pipe and out into the wellbore through holes in the drill bit and back up the well in the annular space between the drill pipe and walls of the wellbore, carrying with it drill cuttings and the like that are then removed before recirculation. This mud performs a number of functions, including removing drill cuttings, lubricating and keeping the bit cool, providing flotation to help support the weight of the drill pipe and casing, coating the wellbore surface to prevent caving in and undesirable flow of fluids in or out of the wellbore, including drilling fluids, brine, and the like.

Obviously, the properties of and the composition of these drilling mud formulations are complex and variable, depending on the conditions involved and the results desired or required including reuse and recycling of mud formulations. One of the most important properties of these drilling muds and other drilling fluids is that they be thermally stable and do not present rheological and thixotropic problems under the conditions of drilling.

A major constituent of these oil based drilling muds are colloidal or gelling agents, normally organophilic clays. Large amounts of the clays are often required to obtain the desired thixotropic properties in the mud formulations. It is difficult to readily incorporate these large amounts of clays into formulations. It is an object of this invention to provide improved formulations using less of the clays without loss of the required thixotropic and thermal properties of the oil-mud formulations.

Most organophilic clays will not yield or swell in the low viscosity, low aromatic content mineral seal oils often used in drilling mud formulations. While heat of about 120 to 160°F will aid in the swelling or activation of the clay particles, most on-site mud mixing facilities do not have the capability of heating the oil during the large volume initial oil-mud makeup. While high shear may also be used to provide heat through frictional forces, to aid the clay particles to swell, most mixing plants do not have high shear equipment, which is expensive initially and in energy requirements and time. Further, because of relatively low yield, higher concentrations of organophilic clays are often required. The excessive amounts required initially cause major problems after hole displacement because of subjection to, and subsequent yield of the organophilic clays, to high downhole temperatures. It is another objective of this invention to maximize the yield of the organophilic clay in a short time, at low shear rates, and to obtain savings in both time and materials in oil based mud formulations.

## SUMMARY OF THE INVENTION

By the use of small amounts of novel amido amine reaction products of a fatty acid, an alkanolamine and a polyalkylene polyamine, improved drilling mud formulations are obtained. In oil mud drilling formulations containing organophilic clays, one is able to maximize the viscosity and gelation of the formulations, resulting in less preparation time and less material usage, especially the clay. In accordance with the invention, one is able to thicken or gel oil-mud systems at usual operating temperatures even when using low viscosity/low aromatic oils as the external phase, and to maximize the yield of organophilic clays readily in a short period of time, at low shear rates. The amido amine extends the utility of organoclays in low viscosity oil-mud systems. They produce more shear thinning fluids, higher yield points and quicker gel strengths while maintaining low plastic viscosities.

## DETAILED DESCRIPTION

Organophilic clays have long provided rheology control in oil continuous fluids. Systems using diesel oil as the external phase show substantial variation in performance of organophilic clays, caused by two variables in the diesel oil. The first is that the chemical composition of diesel oil varies widely because of variations in origin and refining of oil. Second, additives to diesel marketed as fuel include corrosion inhibitors and various surfactants. These additives create unpredictable effects upon performance of organophilic clays. Because the needs of the drilling industry for diesel oil are a small segment of the diesel market, additive-free diesel for drilling is not readily available.

Variations in diesel oil have typically been resolved by adding higher concentrations of organophilic clays, up to 25 percent more, to achieve desired yield point and gel structures, but at the expense of disproportionate increase in plastic viscosity, with a resulting decrease in shear thinning properties of the fluid. Performance of organoclays is further complicated with the introduction of mineral seal oils wherein the aromatic content was decreased to a level that made organophilic clays almost inoperable, and variability in chemical composition became an unknown to supplier and user. All the new low viscosity oils required much higher concentrations of organoclays to develop rheological properties equivalent to those of a similar diesel oil system resulting in formulation difficulties.

Organophilic clays do not respond to temperature changes predictably, especially on initial makeup,

and for temperatures between ambient and 150°F. Most oil mud rheologies are measured at 115°F or 150°F. The mud itself may not be exposed to any temperature above ambient until the well site, where it may be exposed to 300°+F. Typically, the fluid goes into the hole as a relatively thin fluid, the temperature of the hole causes the organoclay to further yield with a corresponding increase in viscosity, with a need for dilution resulting.

In an organoclay formulation with equivalent yield and gel values at room temperature and after being exposed to high temperature, the variation between ambient and 150°F, the heat aged rheological and thixotropic qualities should be minimal. An organoclay that will develop thixotropy and produce non-neutonian fluids at ambient temperatures with a minimum of shear is needed.

Fluids formulated with low viscosity oils should have lower plastic viscosities than similar fluids formulated with diesel oil. Much of this potential advantage is lost when higher concentrations of organoclay are required to achieve adequate rheological properties (yield point) and thixotropy (gel strength). Organophilic clays will viscosify low viscosity oils, but they act more as thickeners than thixotropes. They may have yield point and gel strength, but the plastic viscosity is such that shear thinning properties are reduced. It is more difficult to develop gel structure in low viscosity oils than in diesel oil. Yield point develops first and with higher concentrations of organoclay, gel strengths can be produced. By the time adequate gels are developed, the fluids will have higher plastic viscosities and yield points than desired. While this is true for both type of oils; the problem is more severe for low viscosity oils.

The introduction of low viscosity mineral seal oil fluids created several problems in application of organoclays. First, development of gel strengths in low viscosity oil fluid is much more costly than in diesel oil, especially for rheological propeties at relatively low temperatures (below 150°F). Second, low viscosity oils require higher concentration of organoclay. In diesel oil fluids, drilling fluid grade organoclays develop viscosities at room temperature. But at room temperature, a low viscosity oil may require two to three times as much viscosifier for the same rheology.

The amido amines of this invention are a new chemical additive designed to improve the performance of all oil-mud formulations, particularly those containing organophilic clays, in diesel and low viscosity oils (LVO). They are designed to produce fluids, formulated with LVO, with properties equal to or higher than fluid formulated with diesel oil. They are also designed to provide more shear thinning fluids with improved thixotropy, especially at lower temperatures. The amido amine additives extend the utility of organoclays in low viscosity oil mud systems. They produce a more shear thinning fluid, higher yield points, and quicker gel strengths while maintaining low plastic

viscosities. They are true thixotropic additives, not just an oil mud gellant or viscosifier only.

The novel amido amine additives of this invention are the reaction products of a dimer or trimer fatty acid, a dialkanolamine, and a dialkylene polyamine.

The fatty acid may be the dimer acid, a commercial product prepared by dimerization of unsaturated acids, including 9-dodecenoic(cis), 9-tetradecenoic-(cis), 9-octadecenoic(cis), octadecatetranoic acids, and the like. The typical molecule would contain two carboxyl groups and about 36 carbon atoms in a branched chain configuration. The trimer acid may be used which is also a commercial material and similarly prepared, containing about 54 carbon atoms. Mixtures of dimer acids, trimer acids, and monocarboxylic acids may also be used.

The dialkanolamines include hydroxyalkylamines, for example, materials wherein the alkanol groups contain 1 to 6 carbon atoms, preferably 2 to 4 carbon atoms; including for example diethanol amine, di-n-propanol amine, di-i-propanol amine, dibutanol amine, dipentanol amine, dihexanol amine, and the like, and combinations thereof. Preferred are diethanol amine and dipropanol amine. Alkyl hydroxyalkylamines including ethylhydroxyethyl amine, propylhydroxyethyl amine, butylhydroxypropyl amine, and the like can also be used.

The polyalkylene polyamines include materials wherein the alkylene groups contain about 1 to 6 carbon atoms, preferably 2 to 4 carbon atoms; "poly" refers to an integer from about 2 to 20, and at least 3 nitrogen atoms. These materials may be represented by the general formula

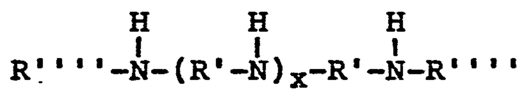

wherein R' is an alkalene group containing 1 to 6 carbon atoms, R'''' is hydrogen or an alkyl group containing 0 to 6 carbon atoms, and x is an integer from 1 to 20. Typical useful materials include diethylene triamine, triethylene tetraamine, tetraethylene pentaamine, polyamine HH, polyamine HPA, and the like. Preferred are diethylene triamine and triethylene tetramine.

A convenient method for preparing products of this invention, which may be represented by the general formula

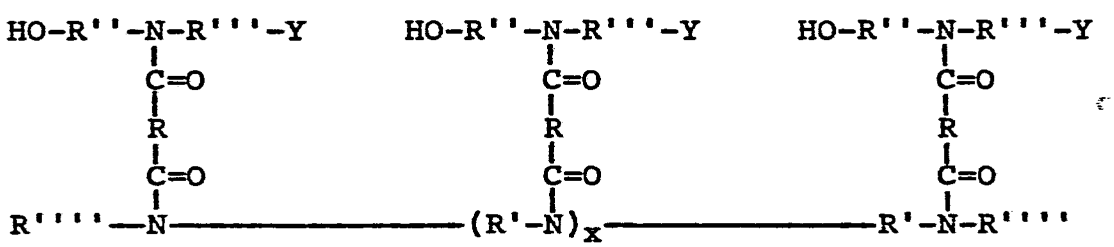

wherein R is an alkalene group containing 30 to 54 carbon atoms, R' is an alkalene group containing 1 to 6 carbon atoms, R'' is an alkalene group containing 1 to 6 carbon atoms, R''' is an alkalene group containing 0 to 6 carbon atoms, R'''' is hydrogen or alkyl radicals containing 0 to 6 carbon atoms, Y is hydrogen or hydroxy, and x is an integer from 1 to 20.

In the first reaction a useful ratio of reactants is about 3 moles of dimer fatty acid and 3 moles of dialkanol amine, heated to eliminate water. In the reaction of 3 moles of dimer acid with 3 moles of diethanolamine, reacted to a temperature of up to 325°F, the half amide is formed as follows

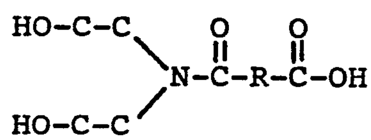

Then about 3 moles of this half reacted dimer acid is further reacted with about one mole of the polyalkylene polyamine such as diethylene triamine through a condensation reaction by heating to eliminate 3 moles of water to form the amide resin.

The general ratio of total reactants used is about 3 moles dimer acid, about 3 moles of alkanolamine as diethanol amine, and 1 mol polyalkylene polyamine such as diethylene triamine, with a total loss of 6 mols water. The reaction is carried out by first weighing the required amount of dimer acid and mixing in a calculated amount of diethanol amine to form the half diethanol amine salt of the dimer acid. The temperature is increased up to the 335°F range to form the half amide of diethanol amine by driving off sufficient water, which is determined by weight loss or by measuring the condensed water. The dibasic dimer acid is now functionally a monobasic dimer acid. After cooling

to the 225 to 250°F range, a calculated amount of polyalkylene polyamine, as diethylene triamine is next added and mixed to form the half amine salt of polyalkylene polyamine such as diethylene triamine, with the remaining half acid dimer. The polyalkylene polyamine such as diethylene triamine, links up with 3 half acid dimers to form a hexamer. Again the temperature is increased up to the 340°F range to drive off sufficient water to form the other half amides with the polyalkylene polyamine, such as diethylene triamine. The resulting resin product is a hexamer containing 6 amides per molecule.

Two separate amide reactions are preferred to produce as uniform a final amido amine as possible. Several different batches were produced starting with 3 different weights of dimer acid with constant ratio of reactants. Each time the final product was essentially the same. When stoichiometric amounts of dimer acid were neutralized with polyalkylene polyamine, such as diethylene triamine alone, the resulting final product was a random mixture that contained a hexamer which was the lowest molecular weight substance as well as other complex substances that could cross-link with much higher molecular weights.

When stoichiometric amounts of dimer acid and diethanol amine are mixed to form the half amine salt, random neutralization can produce some dineutralized dimers, leave some acid unneutralized, as well as form the half dimer acid salt. However, in the formation of the half amide of diethanol amine, the reaction equilibrium produces a uniform half amide intermediate. Once the half diethanol amine amide is formed, the subsequent addition of polyalkylene polyamine such as diethylene triamine has little complication in linking up these now functionally monobasic dimer acids to form the predominate hexamer resin. If the total diethanol amine and polyalkylene polyamine such as diethylene trimine amides are formed as a combined last reaction step, undesirable dynamic displacements of the amines with respect to each other can take place. A variable product mixture will result rather than a uniform hexamer resin.

It should be noted that because of the nature of the reactants some cross-linking may occur, either in the first stage by ester formation, or in the second stage by amide formation, particularly if the mixture is heated to a high temperature for a long period of time. Some cross-linking is not objectionable and may be of some advantage. But excessive cross-linking is undesirable, resulting in insoluble, not readily dispersible, difficult to handle materials. The man skilled in the art can readily provide the reaction conditions as defined to control cross-linking as desired.

In preparing drilling fluids containing the novel amido amine product, the amido amine product may be added at any stage of preparation at any time to any oil based mud. It is not essential to the practice of the invention that the amido amine product per se be added to a mixture of the drilling fluid ingredients. It

may be added to the organophilic clay before the clay is added to the drilling fluid, or it may be added during the preparation of the organophilic clay during reaction of the clay with organic ammonium salts. In any event, to obtain the advantages of the invention, the method of introduction of the amido amine is not critical. It is more efficient to add the amido amine as a drilling fluid ingredient with the other ingredients for use in a variety of formulations.

In using the amido amine product in drilling mud formulations, the amido amine may be added as such or more preferably in a solution or disperson. Any of a variety of organic polar solvents may be used, including amine aldehydes, alcohols, ketones, esters, glycol ethers, carbonates, amides, furans, and the like. Particularly useful are combinations of at least two diverse polar solvents. One useful combination is an alkoxypolyol such as butoxytriglycol and an alkylene carbonate such as propylene carbonate. While the amido amine is not soluble in propylene carbonate, excellent results have been observed with a combination of a major proportion of alkoxypolyol and the alkylene carbonate. For example, a mixture of 90 percent butoxytriglycol and 10 percent propylene carbonate gave excellent results.

The amount of polar solvent used with the amido amine solvent is such that a fluid easily mixed solution or dispersion is obtained. The amount of solvent will vary, depending on its effectiveness in reducing the viscosity of the amido amine, as may be readily determined by those skilled in the art. In using butoxytriglycol and propylene carbonate mixture, 50 weight percent of the amido amine product dissolved in 50 weight percent of the solvent mixture was found to be very satisfactory.

Oil base drilling muds are prepared by a great variety of formulations and with a large number of ingredients, as is well known to those skilled in the art. Specific formulations depend on the state of drilling a well at any particular time, for instance, depending on the depth, the nature of the strata encountered, and the like. The compositions of this invention are directed to and particularly adapted to provide improved oil base drilling muds useful under conditions of high temperature and pressure, such as those encountered in deep wells, where many previously proposed and used formulations do not heat age well in operations under such high temperature and high pressure conditions.

Oil base mud formulations intended for use under high temperature (up to about 500°F) and high pressure (up to about 25,000 psi) conditions may contain a petroleum oil, a weighting agent, an emulsifier, a gelling or thixotropic agent, salts and a fluid loss control agent as the ingredients if desired. Water is often added but it may be introduced from the formations themselves during drilling.

The oil (continuous phase) used is a petroleum oil, generally diesel oil or mineral seal oil, although lighter oils such as kerosene, or heavier oils such as fuel oil, white oil, crude oil, and the like may also be used. The invention is particularly useful with low viscosity, low aromatic oils, No. 2 diesel oil and mineral seal oils.

If water is used, the amount normally is small, and while usually is less than about 10 weight percent, amounts as high as about 60 volume percent may be present under some conditions.

Emulsifiers, both invert and wetting agents, include those normally used, including alkali and alkaline earth metal salts of fatty acids, rosin acids, tall oil acids, the synthetic emulsifiers such as alkyl aromatic sulfonates, aromatic alkyl sulfonates, long chain sulfates, oxidized tall oils, carboxylated 2-alkyl imidazolines, imidazoline salts, amido amines, alkoxy phenols, polyalkoxy alcohols, alkyl phenols, high molecular weight alcohols, and the like.

Water soluble salts often are added to the formulations normally are the brine salts such as sodium chloride, potassium chloride, sodium bromide, calcium chloride, more preferably, and the like, usually in a water solution. Formation brines and seawater may be used. These salts are added to control the osmotic pressure of the formulations as needed, according to drilling conditions.

Weighting materials, if used, include such materials as calcium carbonate, silicates, clays, and the like, but more preferably are the heavier materials

such as the barites, specular hematite, iron ores, siderite, ilmenite, galena, and the like.

The oil-muds normally will be formulated to weigh from greater than about 7 (no weighting agent) to about 22 pounds per gallon of mud. Usually the range is from about 10 to 18 pounds per gallon. The water content will normally be from 0 to 60 percent by volume.

The thixotropic thickening and gelling agents used in many oil-mud formulations are organophilic clays. The clays used may be any of those that have substantial base-exchange capacity. A variety of such materials are known to those skilled in the art, including Wyoming bentonite, montmorillonite, hectorite, attapulgite, illite, fullers earth, beidillite, saponite, vermiculite, zeolites, and the like. Wyoming swelling bentonite and hectorite are normally utilized. While the amido amines of this invention are especially effective when used with these clays, they also enhance the gel strength of formulations not containing clay.

To obtain the desired organophilic clays, the swelling bentonites and hectorites are reacted with functional organic compounds, as is well known to those skilled in the art. The amount of organic compound used will be dependent on the reactivity of the clays used, but usually is from about 50 to 300 milliequivalents of an organic ammonium salt, for example, per 100 grams of clay. The reactions are normally conducted in water and the treated clay is separated and dried. Normally used are onium compounds, such as organic ammonium salts such as quaternary ammonium salts having the

structural formula

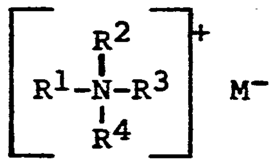

wherein $R^1$ are alkyl groups containing 1 to 20 carbon atoms, $R^2$ are alkyl groups containing 1 to 20 carbon atoms; $R^3$ are alkyl groups containing 1 to 20 carbon atoms; $R^4$ are alkyl groups containing 1 to 20 carbon atoms; and at least one of $R^1$, $R^2$, $R^3$ or $R^4$ contains at least 12 carbon atoms, and M is Cl, Br, I, OH or $SO_4$. Typical reactants include those containing quaternary ammonium cations selected from the group consisting of trimethyl octadecyl ammonium, dimethyl dihydrogenated tallow ammonium, methyl benzyl dicoco ammonium, methyl trihydrogenated tallow ammonium, methyl benzyl dihydrogenated tallow ammonium chloride, and the like. Descriptions of preparation of typical organophilic clays can be found in U.S. Patent Numbers 2,966,506; 4,105,578; 4,382,868; and 4,425,244.

The organophilic clay content of the oil-mud formulation will vary inversely as the density of the oil-mud. The organoclay content may range from about 25 to 30 pounds per barrel (ppb) in low densities, to almost 0 in high densities. Normally an amount from about 2 to about 15 pounds of clay per barrel of mud will be used. The degree of suspension or hole cleaning required or requested will have an impact on the clay concentration as is well known to those skilled in

the art.

The amido amine used in the following Examples was prepared by reacting 3 moles of UNIDYME 14 dimer acid, a tall oil derivative, 96% dimer acid of $C_{18}$ unsaturated acids (oleic acid), 3% trimer acid, 1% monomer, 195 acid number and 200 saponification number, specific gravity 0.95 at 25°C, with 3 moles of diethanolamine (DEA) by heating the mixture up to 335°F to form the half amide of DEA. The half diethanol amine product of the dimer acid was then cooled to 225 to 250°F, 1 mole of diethylene triamine was added to the 3 moles of the half dimer acid and the temperature was increased up to 340°F to form the amido amine hexamer resin. 50 weight parts of the hexamer resin was dissolved in 45 weight parts of butoxytriglycol and 5 weight parts of propylene carbonate. This solution is referred to for convenience as AA.

The organophilic clay used in the Examples was a commercial clay prepared by reacting a Wyoming swelling bentonite clay (smectite) in water with about 50 milliequivalents per 100 grams of clay of dimethyl ditallow ammonium chloride separating the clay and drying.

In the following Examples, a 9 pound and a 12 pound per gallon drilling fluid using low viscosity oil were prepared according to the following recipe:

| Ingredients | 9 pound Mud | 12 pound mud |
|---|---|---|
| Low viscosity oil (Conoco LVTO) | 233.1 cc | 219.2 cc |
| Organoclay | 15.0 grams | 12.0 grams |
| MAGCO DFL[1] | 4.0 grams | 4.0 grams |
| MAGCO DWA[2] | 2.0 grams | 2.0 grams |
| Lime | 4.0 grams | 4.0 grams |
| Water | 77.0 cc | 49.4 cc |
| 77% Calcium chloride | 33.6 grams | 23.7 grams |
| Barite | 62.9 grams | 233.5 grams |
| Oil-water ratio | 75:25 O/W | 80:20 O/W |

[1] Amidoamine water-in-oil emulsifier

[2] Oxidized tall oil wetting additive

The following specific Examples demonstrate the practice and advantages of the invention. The plastic viscosity, yield point and gel strengths were determined with a Fann Viscometer. The yield point is reported in terms of pounds per 100 square feet, the plastic viscosity in centipoises (cps), and gel strength as pounds per 100 square feet.

## EXAMPLE I

A typical low viscosity oil-mud formulation, 9 pounds per gallon, was prepared as described above. This formulation required the addition of 15 pounds of organophilic clay per barrel of formulation to obtain a

fluid having adequate rheological properties for use as a drilling fluid. 20 weight percent of the clay was replaced with the AA in one embodiment, and in a second embodiment, the amount of clay added was 9 pounds with 3 pounds of AA. The plastic viscosity (PV), yield point (YP), 10 second gel (10') and 10 minute gel (10'') were determined and are set forth in Table I.

TABLE I

| | PV | YP | 10' GEL | 10'' GEL |
|---|---|---|---|---|
| Mud + 15 #/bbl Clay | 29 | 15 | 8 | 11 |
| Mud + 12# Clay + 3# AA | 27 | 48 | 37 | 38 |
| Mud + 9# Clay + 3# AA | 26 | 28 | 25 | 30 |

By replacing 20 percent of the clay with the AA, the plastic viscosity remained about constant, while the yield point and gel strengths were substantially increased so that the drilling fluid is greatly improved and is a more useful and versatile material.

EXAMPLE II

The organophilic clays are used in drilling fluids to develop yield point and gel strength in continuously used fluids. It is desirable that this be done with a minimum effect on the plastic viscosity. A series of formulations based on a 12 pound per gallon low viscosity oil-mud fluid were prepared using increasing amounts of organophilic clay and as a comparison, amounts of the organophilic clay and AA required to obtain the same yield point. These data are found in Table II.

TABLE II

| For Yield Point Of: | #/BBL Clay | #/BBL Clay/AA |
|---|---|---|
| 3 | 14 | 3.33/1.66 |
| 5 | 16 | 4/2 |
| 7 | 18 | 5/2.5 |
| 14 | 20 | 6.8/3.4 |
| 20 | 22 | 7.7/3.7 |
| 31 | 24 | 8.9/4.5 |

In each case from 1/3 to 1/2 as much of the mixture of organophilic clay and AA provided the same yield point as the substantially larger amounts of organophilic clay used alone. This contributes to easier preparation and a less expensive drilling fluid, because of use of less clay and less time and energy required to prepare the formulations than those containing the larger amounts of organophilic clay.

By using the AA in the formulations, there is obtained a significant difference in the plastic viscosity and gel strengths (10 second) of the drilling fluids described in Table II, prepared with the clay/AA combination as compared to those made with the organophilic clay alone. These data are set forth in Table III.

TABLE III

| For Yield Point Of: | Organophilic Clay | | Organophilic Clay/AA | |
|---|---|---|---|---|
| | Pl. Vis. | 10' Gel | Pl. Vis. | 10' Gel |
| 3 | 31 | 2 | 17 | 2 |
| 5 | 34 | 3 | 19 | 4 |
| 7 | 41 | 3 | 21 | 6 |
| 14 | 50 | 5 | 24 | 10 |
| 20 | 54 | 6 | 26 | 16 |
| 31 | 63 | 8 | 29 | 24 |

The lower the plastic viscosity for an equivalent yield point, the more useful the drilling fluid. The lower viscosities for the drilling fluids containing the clay/AA combination are evident from this table. Enhanced gel strengths of the fluids containing the AA/clay combination are also shown.

EXAMPLE III

The AA may be added to the drilling fluid formulation as a separate and independent additive. It can be premixed with the organophilic clay, or it can be used as a raw material in combination with the quaternary ammonium salt in the manufacture of the organophilic clay. In this Example 5 weight percent, based upon the weight of the finished product, of AA was mixed with the quaternary ammonium salt and this mixture added to the bentonite to produce an improved organophilic clay. A low viscosity oil (CONOCO LVT) oil-mud formulation, weighing 12 pounds per gallon, was mixed (1) with 12 pounds per barrel of a commercial organophilic clay and (2) 12 pounds per barrel of the AA modified organophilic clay. The properties of the two formulations are set forth in Table IV.

TABLE IV

| | YP | 10' Gel | 10'' Gel |
|---|---|---|---|
| (1) Commercial Organophilic Clay | -2 | 2 | 2 |
| (2) AA Treated Organophilic Clay | 19 | 13 | 25 |

The advantages and greatly improved drilling fluid are obvious from the improved yield points and gel strengths obtained with the organophilic clay containing the AA as compared to formulations containing the clay without the AA.

The novel amido amines of this invention are particularly useful in improving the properties of oil-mud formulations using low viscosity/low aromatic content oils. For example, in formulations using diesel oil, 9.5 pounds per barrel of organophilic clay may be required to provide a yield point of 15, but the same formulation, using a low viscosity oil, would require 21 pounds per barrel of organophilic clay to obtain the same yield point. A more serious problem with low viscosity oils is that such formulations develop gel strengths at a slower rate than they develop yield points. The rate at which gel strengths can be developed in low viscosity oils is about 1/5 that possible for diesel oils. In other words, in the formulations described, if a 15 gel strength is required, in a low viscosity oil, 40 pounds per barrel of organophilic clay could be required, but before that concentration could be achieved, the fluid would become too difficult to pump.

The amido amines of this invention can be used to improve the low temperature performance of organophilic clays, work additively or synergistically depending on concentration with the clays to produce higher yield points and quicker gel strength development, while at the same time maintaining low plastic viscosities which produces a more shear thinning fluid.

While these advantages are particularly valuable in applications where low viscosity oils are used, the amido amines are useful with and improve the performance of oil-muds containing any hydrocarbon oil, including diesel oils, mineral seal oils, and the like. In addition to shear thinning properties is the improvement in thixotropic properties obtained when the defined amido amines are employed. Also important is the reduced temperature dependence of formulations containing the amido amines. To develop optimum rheological properties initially but to have satisfactory aged properties a ratio of about 2:1 of clay to AA may be used. If higher rheology is not required initially, a 4:1 ratio would be preferred. Lower or higher ratios may be used, depending on the particular requirements of the drilling fluid environment.

## CLAIMS

1. An amido amine having the formula

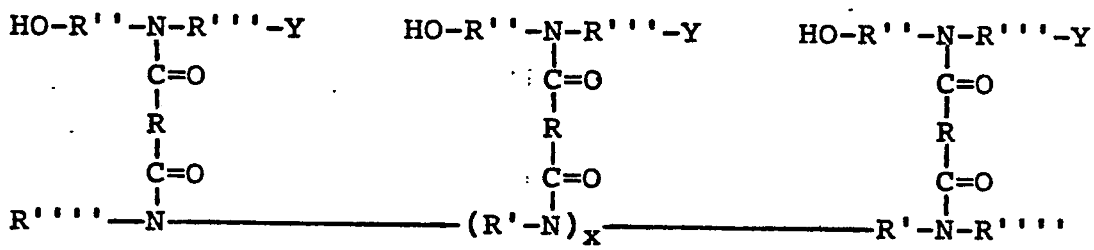

wherein R is an alkalene group containing 30 to 54 carbon atoms, R' and R'' are alkalene groups containing 1 to 6 carbon atoms, R''' is an alkalene group containing 0 to 6 carbon atoms, R'''' is hydrogen or alkyl radicals containing 0 to 6 carbon atoms, Y is hydrogen or hydroxy, and x is an integer from 1 to 20.

2. An amido amine of Claim 1 wherein R contains 36 carbon atoms, R'' and R''' contain 2 to 3 carbon atoms, R' contains 2 carbon atoms, Y is OH, and R'''' is hydrogen.

3. An amido amine of Claim 2 wherein R'' and R''' contain 2 carbon atoms.

4. An amido amine of Claim 1 wherein R is the alkalene residue of a dicarboxylic or tricarboxylic acid containing 36 to 54 carbon atoms, R'' and R''' are the alkalene residues of dialkanolamines containing 1 to 6 carbon atoms, and R' is the alkalene residue of a polyalkylamine containing 1 to 6 carbon atoms.

5. An amido amine of Claim 4 wherein R is derived from a dimer acid, R'' and R''' are derived

from diethanol or dipropanol amine, and R' is derived from a polyethylene polyamine containing at least 3 nitrogen atoms.

6. An amido amine of Claim 5 wherein the polyalkylene polyamine is diethylene triamine.

7. An amido amine of Claim 5 wherein the polyalkylene polyamine is triethylene tetraamine.

8. An amido amine of Claim 5 wherein the polyalkylene polyamine is tetraethylene pentaamine.

9. An amido amine of Claim 5 wherein the polyalkylene polyamine is pentaethylene hexamine.

10. An oil base drilling mud formulation containing an amido amine having the formula

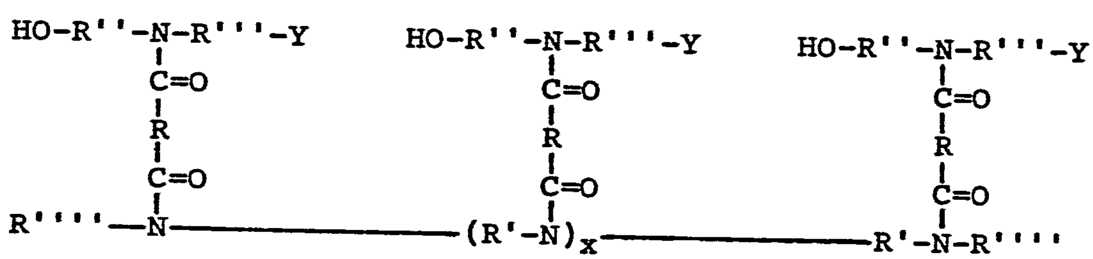

wherein R is an alkalene group containing 30 to 54 carbon atoms, R' and R'' are alkalene groups containing 1 to 6 carbon atoms, R''' is an alkalene group containing 0 to 6 carbon atoms, R'''' is hydrogen or alkyl radicals containing 0 to 6 carbon atoms, Y is hydrogen or hydroxy, and x is an integer from 1 to 20.

11. Oil base drilling mud formulations of Claim 10 comprising a petroleum oil, an emulsifier, a gelling agent, a weighting agent, and wherein R contains 36 carbon atoms, R'' and R''' contain 2 to 3 carbon

atoms, R' contains 2 carbon atoms, Y is OH, and R'''' is hydrogen.

12. Oil base drilling mud formulations of Claim 11 comprising a petroleum oil, an emulsifier, water soluble salts, a gelling agent, a weighting agent and wherein R'' and R''' contain 2 carbon atoms.

13. Oil base drilling mud formulations of Claim 10 wherein the petroleum oil is diesel oil, the emulsifier is a fatty acid emulsifier, the water soluble salts are sodium or calcium chloride dissolved in water, the gelling agent is an organophilic clay, the weighting materials are barite or an iron ore, and wherein R contains 36 carbon atoms, R'' and R''' contain 2 to 3 carbon atoms, R' contains 2 carbon atoms, Y is OH, and R'''' is hydrogen.

14. Oil base drilling mud formulations of Claim 13 wherein R is the alkalene residue of a dicarboxylic or tricarboxylic acid containing 36 to 54 carbon atoms, R'' and R''' are the alkalene residues of dialkanolamines containing 1 to 6 carbon atoms, and R' is the alkalene residue of a polyalkylamine containing 1 to 6 carbon atoms.

15. Oil base drilling mud formulations of Claim 13 wherein the petroleum oil is low viscosity/low aromatic oil, the emulsifier is a fatty acid emulsifier, the water soluble salts are sodium or calcium chloride dissolved in water, the gelling agent is an organophilic clay, the weighting materials are barite or an iron ore, wherein R contains 36 carbon atoms, R'' and R''' contain 2 to 3 carbon atoms, R' contains 2 carbon atoms,

Y is OH, and R'''' is hydrogen.

16. Oil base drilling mud formulations of Claim 15 wherein R is the alkalene residue of a dicarboxylic or tricarboxylic acid containing 36 to 54 carbon atoms, R'' and R''' are the alkalene residues of dialkanolamines containing 1 to 6 carbon atoms, and R' is the alkalene residue of a polyalkylamine containing 1 to 6 carbon atoms.

17. In a process wherein an oil base drilling mud is introduced into a well, the step comprising adding to the oil base drilling mud an amido amine having the formula

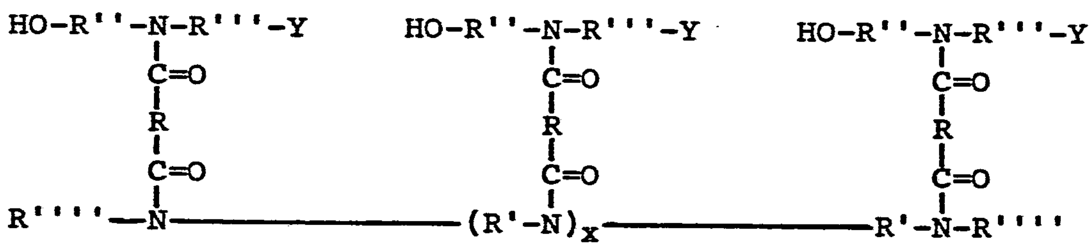

wherein R is an alkalene group containing 30 to 54 carbon atoms, R' and R'' are alkalene groups containing 1 to 6 carbon atoms, R''' is an alkalene group containing 0 to 6 carbon atoms, R'''' is hydrogen or alkyl radicals containing 0 to 6 carbon atoms, Y is hydrogen or hydroxy, and x is an integer from 1 to 20.

18. A process of Claim 11 wherein R contains 36 carbon atoms, R'' and R''' contain 2 to 3 carbon atoms, R' contains 2 carbon atoms, Y is OH, and R'''' is hydrogen.

19. A process of Claim 18 wherein an oil

base drilling mud is introduced into a well, the step comprising adding to the oil base mud an amido amine wherein R'' and R''' contain 2 carbon atoms.

20. A process of Claim 19 wherein R is the alkalene residue of a dicarboxylic or tricarboxylic acid containing 36 to 54 carbon atoms, R'' and R''' are the alkalene residues of dialkanolamines containing 1 to 6 carbon atoms, and R' is the alkalene residue of a polyalkylamine containing 1 to 6 carbon atoms.

21. A process of Claim 20 wherein R is derived from a dimer acid, R'' and R''' are derived from diethanol or dipropanol amine, and R' is derived from a polyethylene polyamine containing at least 3 nitrogen atoms.

22. A gellant comprising an organophilic clay and an amido amine having the formula

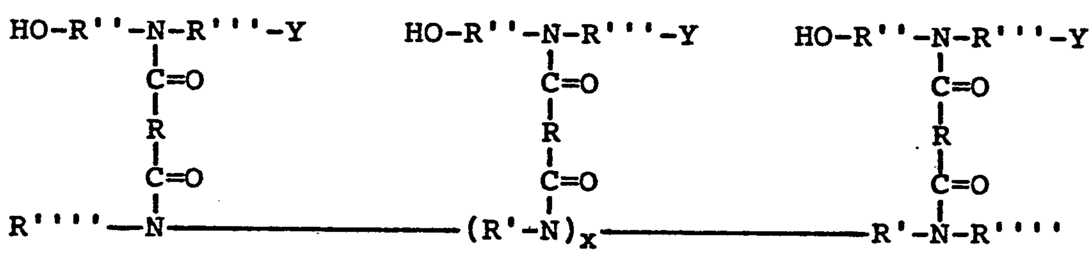

wherein R is an alkalene group containing 30 to 54 carbon atoms, R' and R'' are alkalene groups containing 1 to 6 carbon atoms, R''' is an alkalene group containing 0 to 6 carbon atoms, R'''' is hydrogen or alkyl radicals containing 0 to 6 carbon atoms, Y is hydrogen or hydroxy, and x is an integer from 1 to 20.

23. A gellant of Claim 22 comprising an organophilic clay and an amido amine wherein R contains 36 carbon atoms, R'' and R''' contain 2 to 3 carbon atoms, R' contains 2 carbon atoms, Y is OH, and R'''' is hydrogen.

24. A gellant of Claim 22 comprising an organophilic clay and an amido amine wherein R is the alkalene residue of a dicarboxylic or tricarboxylic acid containing 36 to 54 carbon atoms, R'' and R''' are the alkalene residues of dialkanolamines containing 1 to 6 carbon atoms, and R' is the alkalene residue of a polyalkylamine containing 1 to 6 carbon atoms.

25. A gellant of Claim 22 wherein the organophilic clay is the reaction product of a smectite clay and a quaterneray ammonium salt.

26. A gellant of Claim 25 wherein the weight ratio of organophilic clay to amido amine is from about 0.1:10 to 10:0.1.

27. A gellant of Claim 26 wherein R contains 36 carbon atoms, R'' and R''' contain 2 to 3 carbon atoms, R' contains 2 carbon atoms, Y is OH, and R'''' is hydrogen.

28. A gellant of Claim 27 wherein R'' and R''' contain 2 carbon atoms.